(19) Europäisches Patentamt

European Patent Office

Office européen des brevets

(11) **EP 4 722 666 A1**

## (12) EUROPEAN PATENT APPLICATION

(43) Date of publication:
08.04.2026 Bulletin 2026/15

(21) Application number: 25204541.4

(22) Date of filing: 25.09.2025

(51) International Patent Classification (IPC):
*G01G 19/12* (2006.01)

(52) Cooperative Patent Classification (CPC):
G01G 19/12

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.10.2024 US 202463703324 P
08.09.2025 US 202519322091

(71) Applicant: The Goodyear Tire & Rubber Company
Akron, OH 44316 (US)

(72) Inventors:
• VEGAMOOR, Vamsi Krishna
Akron, 44316 (US)
• SINGH, Kanwar Bharat
Akron, 44316 (US)

(74) Representative: Kutsch, Bernd
Goodyear S.A.
Patent Department
Avenue Gordon Smith
7750 Colmar-Berg (LU)

## (54) STATIC TIRE LOAD ESTIMATION SYSTEM AND METHOD

(57) In one aspect, a system (100) is disclosed comprising a tire (106) disposed on a rim (109) of a wheel (103); an array of light-based sensors (113) disposed circumferentially about the rim (109), each light-based sensor (113) of the array of light-based sensors directed toward the tire (106); a computing device (403) comprising a processor and a memory; and machine-readable instructions stored in the memory that, when executed by the processor, cause the computing device (403) to at least: receive one or more distance readings from the array of light-based sensors (113); generate a parabola approximating a contact area (116) of the tire (106) based at least in part on the one or more distance readings; approximate a shape of the contact area (116) based at least in part on the parabola; and determine a static load estimation based at least in part on the shape of the contact area (116). In another aspect, a system (100) is disclosed comprising a tire (106) disposed on a rim (109) of the wheel (103); a computing device (403) comprising a processor and a memory; and machine-readable instructions stored in the memory that, when executed by the processor, cause the computing device (403) to at least: determine tire data corresponding to the tire (106); determine a minimum number of distance sensors (113) needed to measure a load estimate based at least in part on the tire data; and send a notification to install at least the minimum number of distance sensors (113).

100

**FIG. 1**

## Description

### BACKGROUND

In many circumstances, it is beneficial to know the vehicle mass before the start of a trip. For example, automotive manufacturers, autonomous vehicle companies, transportation and shipping companies may require this information at any time during a journey.

### SUMMARY OF THE INVENTION

The invention relates to a system in accordance with claim 1 or 7, respectively, and to a method in accordance with claim 13.
Dependent claims refer to preferred embodiments of the invention.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.

FIG. 1 is a drawing of a vehicle with one or more tires that include load-measuring sensors according to various embodiments of the present invention.
FIGS. 2 and 3 are examples of a wheel with one or more tires that include load-measuring sensors according to various embodiments of the present invention.
FIG. 4 is an example of network environment according to various embodiments of the present invention.
FIG. 5 is a flowchart illustrating an example of functionality implemented as portions of an application executed in a computing environment of the network environment of FIG. 4 according to various embodiments of the present invention.
FIG. 6 is a flowchart illustrating an example of functionality implemented as portions of an application executed in a computing environment of the network environment of FIG. 4 according to various embodiments of the present invention.

### DEFINITIONS

"Radially outward" and "radially outwardly" refer to a radial direction that is away from the central axis of rotation of the tire.

### DETAILED DESCRIPTION OF PREFERRED EMBODIMENTS OF THE INVENTION

Disclosed are various approaches for the use of an array of light-based sensors and a related algorithm to utilize information from the array to obtain "Key-On" load estimation. In many circumstances, it is beneficial for automotive manufacturers, autonomous vehicle companies, transportation and shipping companies to know the vehicle mass before the start of a trip. One way to accomplish a measurement of the vehicle mass prior to a trip is to estimate the load on each tire to get total vehicle mass as soon as the vehicle is powered up and before it starts moving. This is referred to as "Key-On" load estimation since the vehicle may be running without moving.

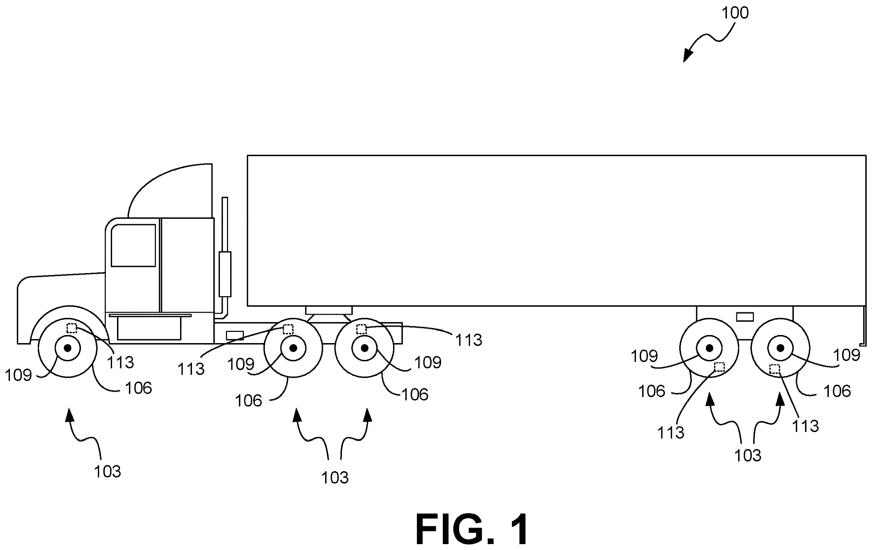

As illustrated in FIG. 1, a vehicle 100 is shown with one or more wheels 103. Each wheel 103 includes a tire 106 on a rim 109. Each wheel 103 can include one or more sensors 113. In some aspects, each one of the wheels 103 on the vehicle 100 includes an array of sensors 113. While the vehicle 100 is depicted as a commercial truck, the vehicle 100 may comprise any type of vehicle that employs tires where the commercial truck is presented as an example. To this end, the vehicle 100 may comprise other vehicles falling into various categories such as passenger vehicles and off-road vehicles, in which such vehicles include a greater or lesser number of wheels 103 than are shown in FIG. 1.

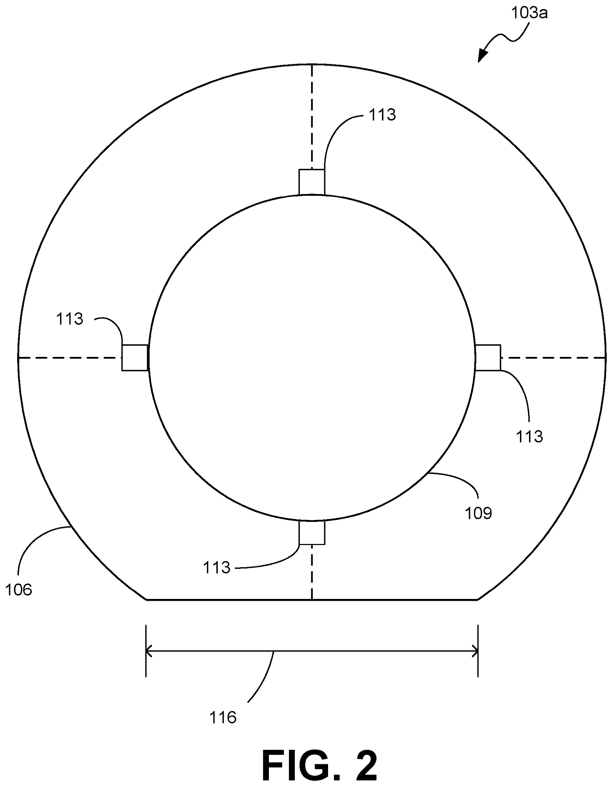

Turning to FIG. 2, shown is a cross-sectional view of a wheel 103a including a tire 106 on a rim 109 and a plurality of sensors 113. As shown in FIG. 2, the plurality of sensors 113 can be disposed on the rim 109 at various locations. However, in some embodiments, the sensors 113 can be disposed in the innerliner of the tire 106. Each of the sensors 113 can be directed from the rim 109 towards the tire 106. In some examples, the sensors 113 are light-based sensors for measuring distance. For example, the sensors 113 can be representative of light-emitting diode (LED) sensors, infrared (IR) sensors, light detection and ranging (LiDAR) sensors, or other photoelectric sensors. Each sensor 113 can comprise an emitter and a detector. In such cases, the emitter of the sensor 113 would be directed toward the tire 106. A corresponding detector can be placed on the rim 109 adjacent to the emitter and can receive the reflected light and yield a distance reading. While FIG. 2 shows four evenly-spaced sensors 113, numerous other sensor configurations are possible.

As shown in FIG. 2, the tire 106 includes a contact area 116. The contact area 116 is representative of a length of the tire 106 which is in contact with a surface, such as pavement, *etc.* The contact area 116 is depicted as a flat length to demonstrate the phenomenon of a slight flattening that occurs in a pressurized tire 106 on a wheel 103 supporting a vehicle 100. The length of the contact area 116 can be used to calculate a load upon a wheel 103.

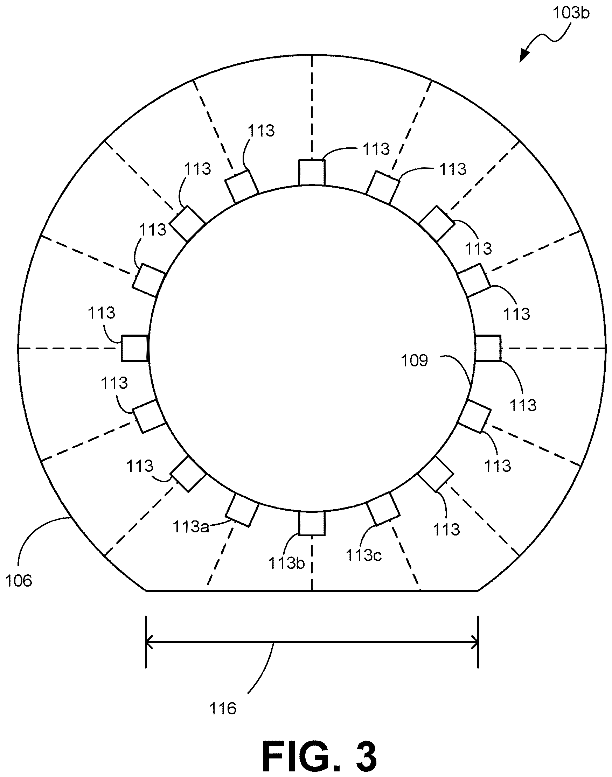

Next, at FIG. 3, shown is another cross-sectional view of a wheel 103b. Similarly to FIG. 2, the wheel 103 of FIG. 3 includes a tire 106 on a rim 109 and a plurality of sensors 113 disposed on the rim 109. FIG. 3 demonstrates an example of an optimized configuration of sensors 113 which provides three sensors 113 directed to the contact area 116 at any rotation of the wheel 103. For example, as shown in FIG. 3, sensors 113a, 113b, and 113c are all directed toward the contact area 116. However, if the wheel 103b were rotated in either direction, at least three sensors 113 would be directed toward the contact area 116. In some examples, the array of sensors 113 is configured such that four sensors 113 are directed to the contact area 116 at any given rotation of the wheel 103b. However, various other configurations are possible, where the minimum number of sensors 113 directed toward the contact area 116 is at least two (e.g., two, three, four, five, six, seven, *etc*.).

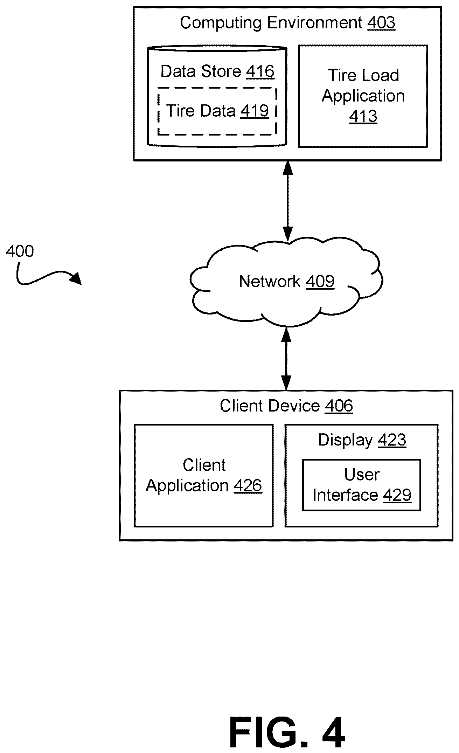

With reference to FIG. 4, shown is a network environment 400 according to various embodiments. The network environment 400 can include a computing environment 403 and a client device 406, which can be in data communication with each other via a network 409.

The network 409 can include wide area networks (WANs), local area networks (LANs), personal area networks (PANs), or a combination thereof. These networks can include wired or wireless components or a combination thereof. The network 409 can also include a combination of two or more networks 409. Examples of networks 409 can include the Internet, intranets, extranets, virtual private networks (VPNs), and similar networks.

The computing environment 403 can include one or more computing devices that include a processor, a memory, and/or a network interface. For example, the computing devices can be configured to perform computations on behalf of other computing devices or applications. As another example, such computing devices can host and/or provide content to other computing devices in response to requests for content.

Moreover, the computing environment 403 can employ a plurality of computing devices that can be arranged in one or more server banks or computer banks or other arrangements. Such computing devices can be located in a single installation or can be distributed among many different geographical locations. For example, the computing environment 403 can include a plurality of computing devices that together can include a hosted computing resource, a grid computing resource or any other distributed computing arrangement. In some cases, the computing environment 403 can correspond to an elastic computing resource where the allotted capacity of processing, network, storage, or other computing-related resources can vary over time.

Various applications or other functionality can be executed in the computing environment 403. The components executed on the computing environment 403 include a tire load application 413, and other applications, services, processes, systems, engines, or functionality not discussed in detail herein. The tire load application 413 can be executed to obtain readings from the sensors 113, perform various calculations, and determine a load estimation for each tire 106 on a vehicle 100.

Also, various data is stored in a data store 416 that is accessible to the computing environment 403. The data store 416 can be representative of a plurality of data stores 416, which can include relational databases or non-relational databases such as object-oriented databases, hierarchical databases, hash tables or similar key-value data stores, as well as other data storage applications or data structures. The data stored in the data store 416 is associated with the operation of the various applications or functional entities described below. This data can include tire data 419, and potentially other data. Tire data 419 can be representative of various specifications about the tire 106. For example, tire data 419 can include a tire type, a tire size, information about the various properties of a tire 106, the position of the tire 106 on a vehicle 100, as well as other information.

The client device 406 is representative of a plurality of client devices that can be coupled to the network 409. The client device 406 can include a processor-based system such as a computer system. Such a computer system can be embodied in the form of a personal computer (e.g., a desktop computer, a laptop computer, or similar device), a mobile computing device (e.g., personal digital assistants, cellular telephones, smartphones, web pads, tablet computer systems, and similar devices), an on-board computer in a vehicle 100, or other devices with like capability. The client device 406 can include one or more displays 423 such as liquid crystal displays (LCDs), gas plasma-based flat panel displays, organic light emitting diode (OLED) displays, electrophoretic ink ("E-ink") displays, projectors, or other types of display devices. In some instances, the display 423 can be a component of the client device 406 or can be connected to the client device 406 through a wired or wireless connection.

The client device 406 can be configured to execute various applications such as a client application 426 or other applications. The client application 426 can be executed in a client device 406 to access network content served up by the computing environment 403 or other servers, thereby rendering a user interface 429 on the display 423. To this end, the client application 426 can include a browser, a dedicated application, or other executable, and the user interface 429 can include a network page, an application screen, or other user mechanism for obtaining user input. The client device 406 can be configured to execute applications beyond the client application 426 such as email applications, social networking applications, word processors, spreadsheets, or other applications.

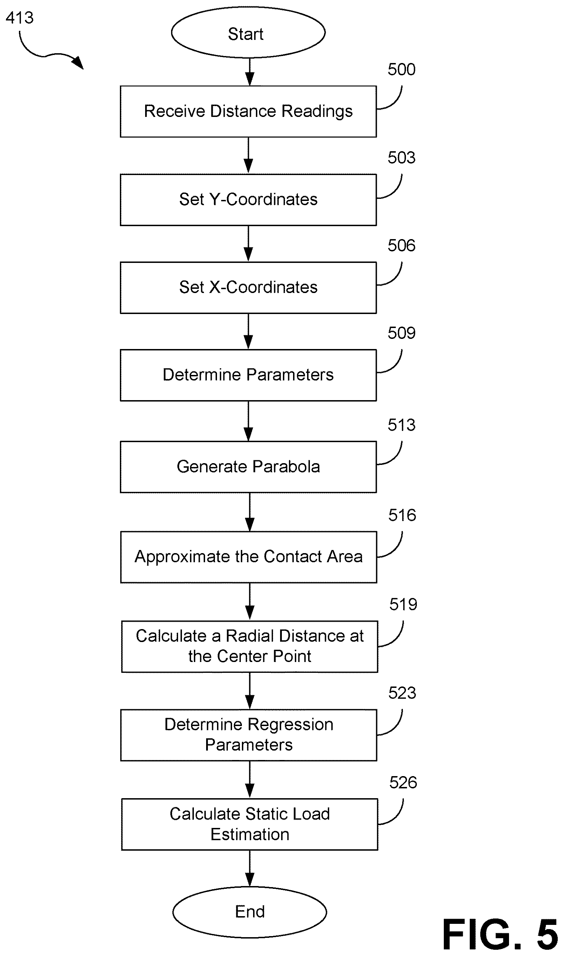

Referring next to FIG. 5, shown is a flowchart that provides one example of the operation of a portion of the tire load application 413. The flowchart of FIG. 5 provides merely an example of the many different types of functional arrangements that can be employed to implement the operation of the depicted portion of the tire load application 413. As an alternative, the flowchart of FIG. 5 can be viewed as depicting an example of elements of a method implemented within the network environment 400.

Beginning with block 500, the tire load application 413 can be executed to receive one or more distance readings. The one or more distance readings can represent a radial distance measurement from a sensor 113 disposed within a wheel 103. In some examples, the tire load application 413 can be executed to communicate with the plurality of sensors 113 to obtain the one or more distance readings. The tire load application 413 can receive readings from the sensors 113 in the specific tire 106.

Next, at block 503, the tire load application 413 can set one or more y-coordinates. **In** some embodiments, the tire load application 413 will use the general equation for a parabola *(e.g., $y = a(x - h)^2 + b$)* to approximate a contact area 116. Accordingly, in some embodiments, the tire load application 413 can set the one or more y-coordinates based at least in part on the one or more distance readings received at block 500. The tire load application 413 can set the one or more y-coordinates equal to the corresponding one or more distance readings.

Moving to block 506, the tire load application 413 can set one or more x-coordinates. **In** some embodiments, the tire load application 413 will use the general equation for a parabola *(e.g., $y = a(x - h)^2 + b$)* to approximate a contact area 116. Accordingly, the tire load application 413 can set the one or more x-coordinates based at least in part on tire data 419. For example, in some cases, the tire load application 413 can set the x-coordinates based at least in part on a radius of the tire 106 or other tire data 419.

At block 509, the tire load application 413 can determine one or more parameters. **In** examples where the tire load application 413 uses the general question for a parabola to approximate the contact area 116, the tire load application 413 can use various approaches to determine the parameters *a* and b, while assuming $h = 0$. Based at least in part on the y-coordinates and the x-coordinates set at blocks 503 and 506, the tire load application 413 can determine one or more parameters (e.g., *a* and b). In some examples, the tire load application 413 can use least squares estimates to determine the one or more parameters.

At block 513, the tire load application 413 can be executed to generate a parabola. The tire load application 413 can generate a parabola to approximate a contact area 116 of a tire 106 based at least in part on the y-coordinates set at block 503, the x-coordinates set at block 506, and the parameters determined at block 509. In some examples, the tire load application 413 can generate a parabola based at least in part on the distance readings received at block 500.

Moving to block 516, the tire load application 413 can be executed to approximate the contact area 116 of a tire 106. The tire load application 413 can approximate the contact area 116 based at least in part on the parabola generated at block 513. **In** some examples, the lowest point in the parabola from block 513 is correlated with the load on a tire 106.

At block 519, the tire load application 413 can be executed to calculate a radial distance at the center point of the contact area 116. Using the shape of the contact area 116 approximated at block 516, the tire load application 413 can determine a center point of the contact area 116 and determine a radial distance from the rim 109 to the center point of the contact area 116. In some examples, this distance can be determined based at least in part on the distance readings received at block 500.

Next, at block 523, the tire load application 413 can be executed to determine one or more regression parameters. In some examples, the one or more regression parameters can be determined based at least in part on calibration for the given type of tire 106. In some embodiments, the one or more regression parameters can be determined based at least in part on the radial distance calculated at block 519.

At block 526, the tire load application 413 can be executed to calculate a static load estimation. Based at least in part on the radial distance from block 519 and the regression parameters from block 523, the tire load application 413 can calculate a static load estimation for the tire 106. In some examples, the tire load application 413 can use the equation $y_R = m_0 + m_1 * (Load)$ to calculate the static load estimation, where $y_R$ is the radial distance from block 519 and $m_0$ and $m_1$ are the one or more regression parameters from block 523. After block 526, the flowchart of FIG. 5 ends.

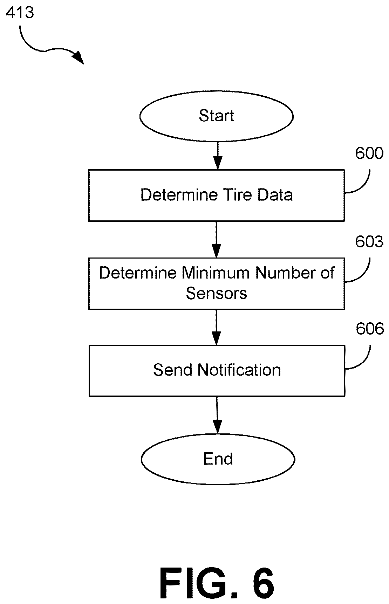

Referring next to FIG. 6, shown is a flowchart that provides one example of the operation of a portion of the tire load application 413. The flowchart of FIG. 6 provides merely an example of the many different types of functional arrangements that can be employed to implement the operation of the depicted portion of the tire load application 413. As an alternative, the flowchart of FIG. 6 can be viewed as depicting an example of elements of a method implemented within the network environment 400.

Starting with block 600, the tire load application 413 can be executed to determine tire data 419. The tire load application 413 can obtain tire data 419 for a particular tire 106 from a data store 416. In some examples, the tire load application 413 can determine tire data 419 based at least in part on one or more distance readings from a plurality of sensors 113.

Next, at block 603, the tire load application 413 can be executed to determine a minimum number of sensors 113. The minimum number of sensors 113 can be a number of sensors 113 needed to measure a load estimate. In some examples, the minimum number of sensors 113 needed in a tire 106 is determined based at least in part on the tire data 419 determined at block 600. The tire load application 413 can use the equation

$n = \dfrac{4}{\max\{p,q\}}$ where p is a length of the contact area 116 as a fraction of the tire circumference (*e.g.*, ∈ *(0,1))*, *q* is the fraction of revolution within which the load needs to be estimated (*e.g.*, ∈ (0,1)). **In** a static load estimation, *q* = 0. **In** some examples, the tire load application 413 determines a minimum number of sensors 113 such that three or more sensors 113 are directed toward the contact area 116 at any given rotation of the tire 106.

Next, at block 606, the tire load application 413 can be executed to send a notification. The notification can be representative of an alert, message, or other communication which can include the minimum number of sensors 113 determined at block 603. The notification can further include an instruction to install at least the minimum number of sensors 113 in a particular wheel 103. In some examples, the tire load application 413 sends the notification to a client device 406. After block 606, the flowchart of FIG. 6 ends.

## Claims

1. A system comprising a tire (106) disposed on a rim (109) of a wheel (103); an array of light-based sensors (113) disposed circumferentially about the rim (109), each light-based sensor (113) of the array of light-based sensors directed toward the tire (106); a computing device (403) comprising a processor and a memory; and machine-readable instructions stored in the memory that, when executed by the processor, cause the computing device (403) to at least: receive one or more distance readings from the array of light-based sensors (113); generate a parabola approximating a contact area (116) of the tire (106) based at least in part on the one or more distance readings; approximate a shape of the contact area (116) based at least in part on the parabola; and determine a static load estimation based at least in part on the shape of the contact area (116).

2. The system of claim **Error! Bookmark not defined.,** wherein the system is configured to determine a minimum number of light-based sensors (113) for the array of light-based sensors based at least in part on a circumference of the tire (106).

3. The system of claim **Error! Bookmark not defined.** or 2, wherein the machine-readable instructions cause the computing device (403) to generate the parabola and further cause the computing device to at least:

    set one or more y-coordinates for the parabola based at least in part on the one or more distance readings;
    set one or more x-coordinates for the parabola based at least in part on a distance between individual light-based sensors (113) of the array of light-based sensors; and
    determine one or more parameters using least squares estimate based at least in part on the one or more y-coordinates and the one or more x-coordinates.

4. The system of at least one of the previous claims, wherein the machine-readable instructions cause the computing device (403) to approximate the shape of the contact area (116) and further cause the computing device (403) to at least:

    use the parabola to approximate the shape of the contact area (116); and
    calculate a radial distance at a center point of the contact area (116) based at least in part on the approximated shape of the contact area (116); and, optionally,
    wherein the machine-readable instructions further cause the computing device (403) to determine a static load estimation, to at least: determine one or more regression parameters based at least in part on the tire (106), and to calculate the static load estimation based at least in part on the one or more regression parameters and based at least in part on the radial distance at the center point of the contact area (116).

5. The system of at least one of the previous claims, wherein individual light-based sensors (113) of the array of light-based sensors further comprise a detector and an emitter.

6. The system of at least one of the previous claims, wherein the individual light-based sensors (113) of the array of light-based sensors are evenly distributed about the rim (109) and arranged on the rim (109) such that at least three individual light-based sensors (113) of the array of light-based sensors are directed toward the contact area (116) at any rotation.

7. A system comprising a tire (106) disposed on a rim (109) of the wheel (103); a computing device (403) comprising a processor and a memory; and machine-readable instructions stored in the memory that, when executed by the processor, cause the computing device (403) to at least: determine tire data corresponding to the tire (106); determine a minimum number of distance sensors (113) needed to measure a load estimate based at least in part on the tire data; and send a notification to install at least the minimum number of distance sensors (113).

8. The system of claim 7, further comprising at least the minimum number of distance sensors (113) disposed about the rim (109), individual distance sensors of the minimum number of distance sensors being directed radially outwardly toward the tire (106).

9. The system of claim 7 or 8, wherein the machine-readable instructions further cause the computing device (403) to at least: receive a plurality of distance readings from the distance sensors (113); generate an approximation of a contact area (116) of the tire (106) based at least in part on the one or more distance readings; and determine a static load estimation based at least in part on the approximation of the contact area (116).

10. The system of at least one of the claims 7 to 9, wherein the machine-readable instructions cause the computing device (403) to generate the approximation of the contact area (403) and cause the computing device (403) to at least:

    generate a parabola approximating the contact area (116) of the tire (106) based at least in part on the one or more distance readings;
    use the parabola to approximate the shape of the contact area (116); and
    calculate a radial distance at a center point of the contact area (116) based at least in part on the approximated shape of the contact area (116).

11. The system of at least one of the claims 7 to 10, wherein the machine-readable instructions cause the computing device (403) to determine a static load estimation and further cause the computing device to at least:

    determine one or more regression parameters based at least in part on the tire; and
    calculate the static load estimation based at least in part on the one or more regression parameters and based at least in part on the radial distance at the center point of the contact area.

12. The system of at least one of the claims 7 to 11, wherein the distance sensors (113) further comprise light-based sensors including an emitter and a detector.

13. A method comprising: receiving, by a computing device (403), a plurality of distance readings from a plurality of distance sensors (113) disposed around a rim (109) of a tire (106); generating, by the computing device (403), an approximation of a contact area (113) of the tire (106) based at least in part on the one or more distance readings; and determining, by the computing device (403), a static load estimation based at least in part on the approximation of the contact area (116).

14. The method of claim 13, further comprising determining, by the computing device (403), a minimum number of distance sensors (113) for the plurality of distance sensors based at least in part on the tire (106); and, optionally, further comprising sending, by the computing device (403), a notification to a client device comprising the minimum number of distance sensors (113).

15. The method of claim 13 or 14, wherein

    (i) generating the approximation of the contact area (116) further comprises:

        generating, by the computing device (403), a parabola approximating the contact area (116) of the tire (106) based at least in part on the one or more distance readings;
        using, by the computing device (403), the parabola to approximate the shape of the contact area (116); and
        calculating, by the computing device (403), a radial distance at a center point of the contact area (116) based at least in part on the approximated shape of the contact area (116); and/or wherein

    (ii) determining a static load estimation, further comprises:

        determining, by the computing device (403), one or more regression parameters based at least in part on the tire (106); and
        calculating, by the computing device (403), the static load estimation based at least in part on the one or more regression parameters and based at least in part on the radial distance at the center point of the contact area (116).

**FIG. 1**

EP 4 722 666 A1

**FIG. 2**

# FIG. 3

Computing Environment 403

Data Store 416

Tire Data 419

Tire Load
Application
413

400

Network 409

Client Device 406

Client
Application 426

Display 423

User
Interface 429

# FIG. 4

413

```
        ┌──────────────┐
        │    Start     │
        └──────┬───────┘
               │
               ▼                    500
     ┌─────────────────────────┐
     │ Receive Distance Readings│
     └───────────┬─────────────┘
                 │
                 ▼                  503
     ┌─────────────────────────┐
     │     Set Y-Coordinates    │
     └───────────┬─────────────┘
                 │
                 ▼                  506
     ┌─────────────────────────┐
     │     Set X-Coordinates    │
     └───────────┬─────────────┘
                 │
                 ▼                  509
     ┌─────────────────────────┐
     │    Determine Parameters  │
     └───────────┬─────────────┘
                 │
                 ▼                  513
     ┌─────────────────────────┐
     │     Generate Parabola    │
     └───────────┬─────────────┘
                 │
                 ▼                  516
     ┌─────────────────────────┐
     │ Approximate the Contact Area │
     └───────────┬─────────────┘
                 │
                 ▼                  519
     ┌─────────────────────────┐
     │ Calculate a Radial Distance at │
     │      the Center Point    │
     └───────────┬─────────────┘
                 │
                 ▼                  523
     ┌─────────────────────────┐
     │   Determine Regression   │
     │        Parameters        │
     └───────────┬─────────────┘
                 │
                 ▼                  526
     ┌─────────────────────────┐
     │   Calculate Static Load  │
     │        Estimation        │
     └───────────┬─────────────┘
                 │
                 ▼
        ┌──────────────┐
        │     End      │
        └──────────────┘
```

# FIG. 5

413

**FIG. 6**

Europäisches
Patentamt
European
Patent Office
Office européen
des brevets

**EUROPEAN SEARCH REPORT**

**Application Number**

EP 25 20 4541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 408 903 A (UNIV ROCKET FORCE ENGINEERING PLA) 29 November 2022 (2022-11-29) * paragraph [0003] - paragraph [0007] * * paragraph [0076] - paragraph [0109] * * figures 1-10 * | 1-15 | INV. G01G19/12 |
| A | YUNTA J ET AL: "Influence of camber angle on tire tread behavior by an on-board strain-based system for intelligent tires", MEASUREMENT, INSTITUTE OF MEASUREMENT AND CONTROL. LONDON, GB, vol. 145, 7 June 2019 (2019-06-07), pages 631-639, XP085737633, ISSN: 0263-2241, DOI: 10.1016/J.MEASUREMENT.2019.05.105 [retrieved on 2019-06-07] * abstract * * section 2.1 - section 2.2 * * figures 1-17 * * section 3.4 * | 1-15 | |

TECHNICAL FIELDS
SEARCHED (IPC)

G01G

The present search report has been drawn up for all claims

| Place of search | Date of completion of the search | Examiner |
|---|---|---|
| The Hague | 6 February 2026 | Koch, Florian |

EPO FORM 1503 03.82 (P04C01)

## ANNEX TO THE EUROPEAN SEARCH REPORT
## ON EUROPEAN PATENT APPLICATION NO.

EP 25 20 4541

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2026

| Patent document cited in search report | Publication date | Patent family member(s) | Publication date |
|---|---|---|---|
| CN 115408903 A | 29-11-2022 | NONE | |

For more details about this annex : see Official Journal of the European Patent Office, No. 12/82

EPO FORM P0459